# EUROPÄISCHE PATENTSCHRIFT

(11) **EP 2 954 757 B1**
(45) Veröffentlichungstag und Bekanntmachung des Hinweises auf die Patenterteilung: **29.07.2020**
(21) Anmeldenummer: 14703822.8
(22) Anmeldetag: 07.02.2014
(51) Int. Cl.: H05B 47/20, H05B 47/21, H05B 47/105, H02J 9/00

(54) **BELEUCHTUNGSANLAGE UND VERFAHREN ZUM BESTIMMEN DES FUNKTIONSZUSTANDES EINER BELEUCHTUNGSANLAGE**
LIGHTING SYSTEM AND METHOD FOR DETERMINING THE FUNCTIONAL STATE OF A LIGHTING SYSTEM
INSTALLATION D'ÉCLAIRAGE ET PROCÉDÉ DE DÉTERMINATION DE L'ÉTAT DE FONCTIONNEMENT D'UNE INSTALLATION D'ÉCLAIRAGE

(30) Priorität: 11.02.2013 DE 102013101322; 08.08.2013 DE 202013103576 U
(43) Veröffentlichungstag der Anmeldung: 16.12.2015
(73) Patentinhaber: Weidmüller Interface GmbH & Co. KG, 32758 Detmold (DE)
(72) Erfinder: GERKENS, Michael, 33617 Bielefeld (DE); SCHLINGMANN, Hans, 32805 Horn-Bad Meinberg (DE)
(74) Vertreter: Kleine, Hubertus
(86) Internationale Anmeldenummer: PCT/EP2014/052486
(87) Internationale Veröffentlichungsnummer: WO 2014/122291

(56) Entgegenhaltungen:
- EP-A1- 2 645 529
- EP-A2- 1 411 750
- WO-A1-2010/092504
- WO-A1-2012/171531
- DE-B3-102009 029 930
- US-A1- 2008 116 825

## Beschreibung

Die vorliegende Erfindung betrifft eine Beleuchtungsanlage, insbesondere zur Not- und/oder Sicherheitsbeleuchtung, mit mehreren Leuchten mit einem Leuchtkörper. Die vorliegende Erfindung betrifft weiterhin ein Verfahren zum Bestimmen des Funktionszustandes einer Beleuchtungsanlage.

Eine solche elektrische Not- und/oder Sicherheitsanlage ist beispielsweise die Notbeleuchtung, die Personen insbesondere in öffentlichen Gebäuden auf Notausgänge hinweist, und/oder eine zumindest geringfügige Beleuchtung in Fluren und/oder Aufzügen zur Verfügung stellt. Die Funktion von elektrischen Not- und/oder Sicherheits- Beleuchtungsanlagen sollte aus Sicherheitsgründen dauerhaft gewährleistet sein.

Um die Funktion einer solchen Notbeleuchtung zu gewährleisten, müssen die Notleuchten der Notbeleuchtung regelmäßig überprüft werden. Eine Überprüfung aller Notleuchten eines Gebäudes ist jedoch in Abhängigkeit von der Größe des Gebäudes gegebenenfalls sehr aufwendig. Zudem sind nicht immer alle Räume zugänglich. Außerdem ist auch nicht immer durch einfaches Ein- und Ausschalten die vollständige Funktion einer Notleuchte erfassbar.

Die Druckschrift US 2008/0116825 A1 beschreibt eine Beleuchtungsanlage mit zumindest einer Leuchte einer Leuchteneinheit, die entweder mit einer Versorgungsspannung oder mit einer Messspannung beaufschlagt wird. Die Messspannung dient einer Leuchtenüberprüfung. Im Fehlerfall wird innerhalb der Leuchteneinheit der Leuchte ein Widerstand parallelgeschaltet. Als Messspannung wird eine (ggf. pulsierende) Gleichspannung mit einer geringeren Spannung eingesetzt, die von einer Messspannungsquelle mit hohem, Innenwiderstand bereitgestellt wird. Ist im Fehlerfall der Leuchte der genannte Widerstand der Leuchte parallelgeschaltet, bricht die Spannung der Messspannungsquelle ein, was entfernt von der Leuchte am Ausgang der Messspannungsquelle detektiert werden kann. Eine Überprüfung in einem eingeschalteten Betriebszustand ist auf diese Weise allerdings nicht möglich.

In der Druckschrift WO 2010/092504 A1 ist ein Treiber für ein LED-Leuchtensystem beschrieben, dessen Betrieb anhand einer Rückmeldung vom LED-Leuchtensystem abhängig von Betriebszuständen des LED-Leuchtensystems eingestellt wird. Dazu ist in einem Ausführungsbeispiel in dem Leuchtensystem ein Sensor zur Bestimmung des Betriebszustands integriert, um eine Übertemperatur zu erkennen. In Reaktion auf eine erkannte Übertemperatur verändert das Leuchtensystem seine Impedanz, z.B. durch einen den LEDs parallel geschalteten Zweig, in dem ein temperaturabhängiger Widerstand als Sensor angeordnet ist. Die Impedanzänderung wird von dem Treiber erkannt und führt zu einer Reduzierung der an das Leuchtensystem vom Treiber gelieferten Leistung, um dessen Temperatur zu senken. Zur Detektion der Impedanz des LED-Leuchtensystems wird das vom Treiber gelieferte Stromsignal beispielsweise mit einem Hochfrequenzsignal überlagert und ein bei der Hochfrequenz fließender Strom gemessen. Eine Ausfallerkennung ist damit bei einem LED-Leuchtensystem, das mit dem Treiber verbunden ist, ebenfalls möglich. Für eine Not- und/oder Sicherheitsbeleuchtung wäre diese Anordnung jedoch nicht geeignet, da bei Not- und/oder Sicherheitsbeleuchtungen in der Regel eine Mehrzahl von Leuchten parallel geschaltet mit einem Treiber verbunden sind.

Eine weitere Leuchtenüberwachung ist aus der Druckschrift DE 10 2009 029 930 B3 bekannt. Dabei wird im Betrieb einer Parallelschaltung mehrerer Leuchten durch ein Umschalten zwischen einer Strom- und einer Spannungsquelle mithilfe eines Messwiderstands ein Innenwiderstand der Leuchtenanordnung gemessen. Durch einen Vergleich mit einem Referenzwert kann ein Ausfall einer der Leuchten ermittelt werden. Dieses Verfahren wird im Betrieb der Leuchten durchgeführt, setzt allerdings einen konstanten Verbrauch der Leuchten voraus. Zudem stellt sich eine sichere Erkennung eines Ausfalls einer einzelnen Leuchte bei einer Parallelschaltung einer großen Anzahl von Leuchten als problematisch dar, da sich der gemessene Innenwiderstand der Leuchten in dem Fall nur geringfügig ändert und daher schwer zu detektieren ist.

Die Druckschrift WO 2012/171531 A1 beschreibt ein Beleuchtungssystem mit einer Anordnung einer Mehrzahl von miteinander verbundenen LEDs (light emitting diodes). Zur Überprüfung der LEDs wird während des Betriebs der Anordnung mittels einer Gleichspannung eine Wechselspannung an die Anordnung angelegt und ein Impedanzspektrum der Anordnung gemessen. Dieses wird mit einem zuvo gemessenen Referenzspektrum vergleichen, das bei intakter Anordnung aufgezeichnet wurde. Signifikante Abweichungen eines aktuell gemessenen Impdanzspektrums von dem Referenzspektrum deuten auf eine nicht intakte Anordnung hin. Durch die Impedanzmessung durch Wechselspannung, die auf die versorgende Gleichspannung aufmoduliert werden kann, ist eine Fehlerdetektion während des Betriebs möglich. Allerdings können nur solche Fehler detektiert werden, die sich in einer signifikanten Änderung des Impedanzspektrums der gesamten Anordnung äußern.

Aufgabe der Erfindung ist es, eine zur Not- und/oder Sicherheitsbeleuchtung geeignete Beleuchtungsanlage zur Verfügung zu stellen, bei der die vollständige Funktion ihrer Leuchten während ihres Betriebs sicher und auf einfache Weise, insbesondere aus der Ferne, prüfbar ist.

Die Aufgabe wird gelöst mit einer Beleuchtungsanlage gemäß dem Anspruch 1 und einem Verfahren gemäß Anspruch 10. Vorteilhafte Ausführungsformen sind den Unteransprüchen zu entnehmen.

Bei einer erfindungsgemäßen Beleuchtungsanlage der eingangs genannten Art umfasst jede Leuchte eine dem Leuchtkörper vorgeschaltete definierte Impedanz. Weiterhin ist für die euchten der Beleuchtungsanlage eine Prüfvorrichtung vorgesehen, die mit den Leuchten gemeinsam in der Beleuchtungsanlage angeordnet ist. Dabei sind alle Leuchten der Beleuchtungsanlage parallel geschaltet. Die Leuchten umfassen jeweils zumindest einen Leuchtkörper, beispielsweise eine Glühlampe, eine LED, eine Leuchtröhre oder andere Leuchtkörper. Die Prüfvorrichtung ist zum Messen der Impedanz der Parallelschaltung der Mehrzahl der Leuchten vorgesehen. Sie weist eine Verarbeitungseinheit auf, mit der ein Hochfrequenzsignal als Messsignal erzeugbar ist, um die Impedanz der Leuchte sowohl in einem Referenzzustand, in dem sie ausgeschaltet ist, als auch in einem Betriebszustand, in dem sie eingeschaltet ist, zu messen. Wird eine sich beispielsweise von einem zuvor gemessenen Referenzwert abweichende Impedanz für die zusammen geschalteten Leuchten ermittelt, lässt dieses auf einen Defekt bei einer der Leuchten oder deren Zuleitung schließen.

Die Impedanz ist im Eingangskreis jeder Leuchte vorgesehen und bestimmt die Eingangsimpedanz der Leuchte maßgeblich. Durch die definierte Impedanz ist eine Eingangsimpedanz der Leuchte auch dann für die Prüfvorrichtung messbar, wenn die Eigenimpedanz des Leuchtkörpers der Leuchte (oder einer dem Leuchtkörper vorgeschalteten Ansteuerschaltung) eine Messung nicht zulässt, beispielsweise weil die Eigenimpedanz sehr klein oder sehr groß ist.

Durch eine Impedanzmessung der Leuchten an der Prüfvorrichtung ist eine Leitungsunterbrechung, bei der eine Leuchte oder die einer Leuchte folgenden Leuchten von der Beleuchtungsanlage getrennt sind, ein Leitungskurzschluss, bei dem die gemessene Impedanz etwa Null ist, und/oder die Funktionsfähigkeit der Leuchten messbar. Um feststellen zu können, ob eine Leitungsunterbrechung nur die Zuleitung einer einzelnen Leuchte oder die Zuleitung zu mehreren Leuchten betrifft, ist es bevorzugt, eine definierte Abschlussimpedanz für die Zuleitung, insbesondere die Zuleitung zu mehreren Leuchten, zu verwenden.

Erfindungsgemäß umfassen die Leuchten jeweils eine Uberwachungsvorrichtung zur Überwachung von Eigenschaften der Leuchte.

Solche Eigenschaften sind beispielsweise ein Betriebs- bzw. Fehlerzustand der Leuchte, z.B. eine abnehmende, zu geringe oder zu große Leuchtstärke oder das Auftreten einer Übertemperatur. Die Überwachungsvorrichtung stellt die Impedanz der Leuchte abhängig von den Eigenschaften der Leuchte ein. Auf diese Weise können Informationen über Eigenschaften der Leuchte, insbesondere über einen Fehlerbetriebszustand anhand der Impedanz zentral an die Prüfvorrichtung übermittelt werden.

Weiterhin ist es bevorzugt, dass eine oder mehrere der Leuchten einen oder mehrere Leuchtkörper umfasst, der oder die in verschiedenen Leuchtmodi betreibbar sind. Bei solchen Leuchten ist es bevorzugt, dass die Eigenschaften auch das korrekte Funktionieren der Leuchtmodi umfassen. Ebenfalls bevorzugt umfasst eine oder mehrere der Leuchten ein Vorschaltgerät für die Leuchte oder Leuchten. Bei solchen Leuchten ist es bevorzugt, dass die Eigenschaften auch die Funktionsfähigkeit des Vorschaltgerätes umfasst.

Die Überwachungsvorrichtung weist Mittel zum Verstimmen der Impedanz auf. Bevorzugt sind die Mittel eine oder mehrere Verstimmimpedanzen, die der Impedanz parallel und/oder in Reihe schaltbar sind. Dabei werden den Eigenschaften bestimmte Verstimmimpedanzen zugeordnet und als Fehlercode genutzt. Dadurch wird die definierte Impedanz im Rahmen eines definierten Wertekreises verstimmt, so dass die Eingangsimpedanz der Leuchte in dem Impedanzwertekreis liegt. Bei einer Impedanzmessung von der Prüfvorrichtung aus ist aus der verstimmten Eingangsimpedanz der Leuchte nicht nur erkennbar, welche der Leuchten der Notbeleuchtung defekt ist, sondern auch, welcher Fehler in der Leuchte vorliegt.

Um Rückschlüsse aus einer Prüfmessung ziehen zu können, ist es bevorzugt, dass die Prüfvorrichtung eine Verarbeitungseinheit zur Bestimmung eines Funktionszustandes der Leuchten und/oder der Notbeleuchtung umfasst. Weiterhin bevorzugt umfasst sie einen Datenspeicher, insbesondere einen Datenfestspeicher, zum Speichern von Impedanzwerten als Referenzwerte und/oder Vergleichswerte.

Um eine Prüfmessung durchführen zu können, ist es weiterhin bevorzugt, dass die Prüfvorrichtung eine Bedienerschnittstelle aufweist, beispielsweise eine Tastatur oder zumindest Eingabetasten, über die die Prüfmessung einleitbar ist. Vorzugsweise sind an der Bedienerschnittstelle zudem Prüfergebnisse ausgebbar, beispielsweise über ein Display oder eine Druckerschnittstelle.

Die Beleuchtungsanlage, vorzugsweise die Prüfvorrichtung der Beleuchtungsanlage, weist zudem bevorzugt eine Kommunikationsschnittstelle auf, mit dem die Prüfergebnisse, insbesondere der Funktionszustand der Leuchten, an eine Kommunikationsgegenschnittstelle übertragbar ist. Dabei ist es bevorzugt, die Kommunikationsschnittstelle und die Kommunikationsgegenschnittstelle über ein herkömmliches drahtgebundenes oder drahtloses Netzwerk miteinander zu verbinden, beispielsweise über ein LAN, insbesondere eine Ethernet oder Feldbusverbindung, WLAN oder ein Mobilfunknetz.

Alternativ und/oder zusätzlich ist es bevorzugt vorgesehen, den Funktionszustand, insbesondere einen nicht korrekten Funktionszustand, optisch und/oder akustisch auszugeben, beispielsweise an der Beleuchtungsanlage selbst. Zu diesem Zweck kann eine entsprechende Signal- bzw. Alarmvorrichtung an der Beleuchtungsanlage angeordnet sein.

In einer bevorzugten Ausgestaltung kann ein (Alarm-) Signal durch ein zeitlich moduliertes Leuchtmuster der zumindest einen Leuchte selbst ausgegeben werden. Zu diesem Zweck können die Leuchten der Beleuchtungsanlage beispielsweise ein wiederholtes Blinkmuster ausgeben, z.B. im Abstand von einigen Sekunden oder einigen 10 Sekunden ein- oder mehrfach kurz aufleuchten. Bei eingeschalteten Leuchten kann ein umgekehrtes Blinkmuster ausgegeben werden, indem die Leuchten gleichzeitig oder bevorzugt nacheinander im Abstand von einigen Sekunden oder einigen 10 Sekunden ein- oder mehrfach kurz verlöschen. Auf diese Weise kann ein nicht korrekter Funktionszustand einer oder mehrerer der Leuchten signalisiert werden, ohne dass eine zusätzliche Signalleuchte notwendig wäre. Die Funktonalität der (noch funktionsfähigen) Leuchten wird dabei durch das kurze Aufleuchten bzw. Verlöschen nicht beeinträchtigt.

Außerdem ist es bevorzugt, dass eine Prüfmessung auch von der Kommunikationsschnittstelle aus einleitbar ist. Diese Ausführungsform ermöglicht die Prüfung der Notbeleuchtung von der Ferne aus, beispielsweise über Internet oder eine Mobilfunkverbindung.

Weiterhin ist es bevorzugt, dass die Beleuchtungsanlage eine Notstromsversorgung aufweist, deren korrekte Funktion ebenfalls von der Prüfvorrichtung ermittelt wird. Besonders bevorzugt ermöglicht die Prüfvorrichtung die Überprüfung der Notstromsversorgung, über eine Prüfung einer Batteriespannung oder einer Batteriekapazität.

Die Aufgabe wird ebenfalls gelöst mit einem Verfahren zum Bestimmen des Funktionszustandes einer Anordnung mehrerer Leuchten einer Beleuchtungsanlage, insbesondere zur Not- und/oder Sicherheitsbeleuchtung, mit einer Prüfanordnung. Bei dem Verfahren wird
- ein erster Impedanzwert der Anordnung der Leuchten mittels eines Hochfrequenzsignals als Messsignal in einem Referenzzustand gemessen, wobei
- der gemessene Impedanzwert als Referenzwert gespeichert wird, wobei
- ein zweiter Impedanzwert der Anordnung der Leuchten mittels des Hochfrequenzsignals als Messsignal in einem Betriebszustand, in dem die Leuchten eingeschaltet sind, wiederholt gemessen wird, wobei
- der zweite Impedanzwert mit dem ersten Impedanzwert verglichen wird, und wobei
- ein Funktionszustand abhängig von dem Ergebnis des Vergleichs bestimmt wird.

Davon ausgehend, dass zum Zeitpunkt der Bestimmung des Referenzwertes alle Leuchten funktionsfähig waren, zeigt eine Abweichung des nachfolgend gemessenen zweiten Impedanzwertes einen Defekt einer der Leuchten ihrer Zuleitung an. Wenn die Leuchten dabei eine definierte Impedanz in ihrem Eingangskreis aufweisen, die durch eine in die Leuchten integrierte Überwachungsvorrichtung verändert wird, wenn ein Defekt vorliegt, kann der Referenzwert bevorzugt bei ausgeschalteten Leuchten ermittelt werden. In dem Fall wird von funktionstüchtigen Zuleitungen ausgegangen. Sofern den Leuchten mit Hilfe der Überwachungsvorrichtung zudem Impedanzwerte eines Wertekreises als Fehlercode zugeordnet sind, ist mit dieser Messung zudem bestimmbar, welcher Defekt vorliegt.

Es ist bevorzugt, dass die Prüfvorrichtung die Impedanzwerte über Versorgungsleitungen der Leuchten misst. Dadurch werden keine zusätzlichen drahtgebundene oder drahtlose Kommunikationsverbindungen und/oder Messleitungen benötigt.

Nachfolgend wird die Erfindung unter Bezug auf die Zeichnungen anhand von Ausführungsbeispielen näher erläutert, wobei weitere Vorteile der Erfindung deutlich werden.

Es zeigt:
- Fig. 1: eine exemplarische Beleuchtungsanlage mit einer Notbeleuchtung, die genau eine Leuchte umfasst; und
- Fig. 2: eine erfindungsgemäße Beleuchtungsanlage mit einer Notbeleuchtung, die mehrere parallel geschaltete Leuchten umfasst.

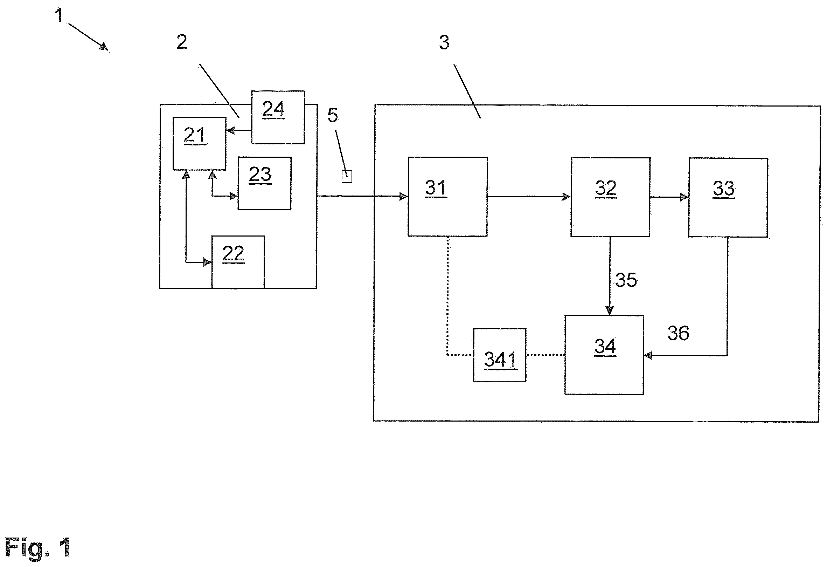

Die Beleuchtungsanlage 1 der Fig. 1 umfasst eine Notbeleuchtung mit einer Leuchte 3 sowie mit einer Prüfvorrichtung 2 zum Prüfen der Leuchte 3. Die Leuchte 3 weist einen oder gegebenenfalls mehrere Leuchtkörper 33 auf, beispielsweise eine Glühlampe, eine LED oder eine Leuchtröhre. Zudem weist sie eine definierte Impedanz 31 auf, die dem Leuchtkörper 33 vorgeschaltet ist. Die Impedanz 31 ist in einem Eingangsschaltkreis der Leuchte 33 so angeordnet, dass sie die Eingangsimpedanz der Leuchte 3 maßgeblich bestimmt. Sie ist bevorzugt aus einem oder aus einer Schaltung mehrerer analoger elektrischer Bauteile gebildet, insbesondere aus einer Reihen- und/oder Parallelschaltung eines oder mehrerer Widerstände, Kondensatoren und/oder Spulen (nicht dargestellt). Durch die definierte Impedanz 31 ist auch dann messbar, wenn dieses aufgrund der Eigenimpedanz des oder der Leuchtkörper 33 der Leuchte 3 alleine nur schwer möglich wäre, beispielsweise weil die Eigenimpedanz sehr groß oder klein ist.

Die hier gezeigte Leuchte 3 weist zudem ein Vorschaltgerät 32 zum Betreiben des einen oder der mehreren Leuchtkörper 33 auf. Weiterhin weist sie eine Überwachungsvorrichtung 34 auf, mit der Eigenschaften der Leuchte 3 wie beispielsweise die Funktionsfähigkeit ihrer Leuchtkörper 33, zu geringe oder zu hohe Leuchtstärke oder eine abnehmende Leuchtstärke eines Leuchtkörpers 33, Übertemperaturen oder eine korrekte Funktion verschiedener Leuchtmodi eines oder mehrerer Leuchtkörper 33 feststellbar sind. Zudem ist mit der Überwachungsvorrichtung 34 die Funktionsfähigkeit des Vorschaltgerätes 32 prüfbar. Die Überwachungsvorrichtung 34 kann eine analoge Elektronikschaltung sein, aber auch digital realisiert sein, beispielsweise mit Hilfe eines Mikrocontrollers.

Die Funktionsfähigkeit dieser Eigenschaften wird mit Hilfe der Überwachungsvorrichtung 34 wiederholt, beispielsweise zyklisch, festgestellt.

Für den Fall, dass die Funktionsfähigkeit einer oder mehrerer dieser Eigenschaften nicht mehr gegeben ist, und somit ein Fehler in der Leuchte 3 vorliegt, weist die Überwachungsvorrichtung 34 Mittel 341 auf, mit denen die definierte Impedanz 31 verstimmbar ist. Die Mittel 341 sind Verstimmimpedanzen, die ebenfalls bevorzugt aus einer oder mehreren analogen Bauteilen (nicht gezeigt) wie Widerständen, Kondensatoren und/oder Spulen gebildet sind. Sie werden der definierten Impedanz 31 parallel oder in Reihe geschaltet, so dass sich die Eingangsimpedanz der Leuchte 3 verändert. Diese Veränderung ist von der Prüfvorrichtung 2 messbar.

Dafür weist die Prüfvorrichtung 2 eine Verarbeitungseinheit 21 auf, beispielsweise eine prozessorbasierte Schaltung, mit der ein Messsignal 5, beispielsweise ein Hochfrequenzsignal, erzeugbar ist. Bei ausgeschalteter Leuchte 3 wird mithilfe des Messsignals 5 die Eingangsimpedanz der Leuchte 3 gemessen. Der dabei gemessene erste Impedanzwert wird als Referenz- und/oder Vergleichswert in einem Datenspeicher 23 gespeichert.

Eine spätere Prüfmessung wird bevorzugt bei eingeschalteter Leuchte 3 vorgenommen. Prinzipiell ist aber auch eine Prüfung bei ausgeschalteter Leuchte 3 möglich. Auch dabei wird die Eingangsimpedanz der Leuchte 3 mit Hilfe des Messsignals 5 geprüft. Der dabei gemessene zweite Impedanzwert wird mit dem als Referenzwert dienenden ersten Impedanzwert verglichen. Bei einer Abweichung weist die Leuchte 3 einen Defekt auf.

Um die Prüfmessung an der Prüfvorrichtung 2 oder von einem entfernten Ort aus einleiten und/oder überwachen sowie prüfen zu können, weist die Prüfvorrichtung 2 zudem eine Bedienerschnittstelle 24 und/oder eine Kommunikationsschnittstelle 22 auf. Die Bedienerschnittstelle 24 umfasst bevorzugt Eingabemittel (nicht gezeigt) wie eine Tastatur und/oder Ausgabemittel (nicht gezeigt) wie ein Display und/oder eine Druckerschnittstelle. Sie ist beispielsweise an einem leicht zugänglichen Ort nahe der Notbeleuchtung oder in einer Schaltzentrale (nicht gezeigt) oder ähnlich angeordnet.

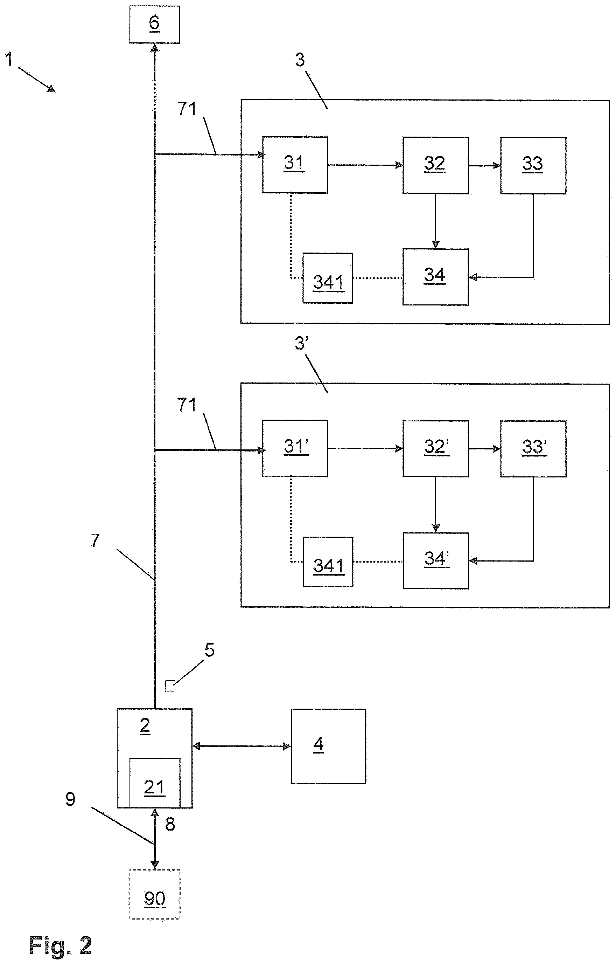

Die Kommunikationsschnittstelle 22 ermöglicht bevorzugt eine Datenübertragung über ein drahtgebundenes oder drahtloses Netzwerk 9 (s. Fig. 2). Dabei wird ein Kommunikationssignal 8 zu einer entfernten Kommunikationsgegenschnittstelle 90 übertragen. Die Kommunikationsgegenschnittstelle 90 ist beispielsweise an einem entfernten PC, einem GSM (Global System for Mobile Communications) - Modem oder einem Mobiltelefon angeordnet, so dass die Prüfmessung von dem PC oder Mobiltelefon aus einleitbar, überwachbar und/oder prüfbar ist.

In der Fig. 2 ist eine erfindungsgemäße Beleuchtungsanlage 1 gezeigt, die neben der Prüfvorrichtung 2 eine Notbeleuchtung mit mehreren Leuchten 3, 3' umfasst. Die Leuchten 3, 3' sind jeweils über Stichleitungen 71 parallel geschaltet an eine gemeinsame Zuleitung 7 angeschlossen. Die Leuchten 3, 3' weisen denselben Aufbau wie die Leuchte 3 der Fig. 1, und die Prüfvorrichtung 2 weist denselben Aufbau wie die Prüfvorrichtung 2 der Fig. 1 auf. Bei der Prüfung der Notbeleuchtung wird daher in analoger Weise wie in Fig. 1 zunächst ein erster Impedanzwert als Referenzwert und später ein zweiter Impedanzwert als Mess- und Vergleichswert bestimmt.

Bei dieser Beleuchtungsanlage 1 werden den Leuchten 3, 3' bevorzugt verschiedene definierte Impedanzen 31 zugeordnet. Die definierten Impedanzen 31 sind dabei so gewählt, dass bei einem Auftreten eines Funktionsfehlers einer Leuchte 3 erkennbar ist, welche Leuchte 3 defekt ist. Bei einer Verstimmung der definierten Impedanz 31 durch die Verstimmimpedanzen 341 der Leuchte 3 ist zudem bestimmbar, welche Eigenschaft der Leuchte 3 defekt ist.

Sind an eine Stichleitung 71 mehrere hintereinander geschaltete Leuchten 3 angeschlossen, ist von der Prüfvorrichtung 2 aus lediglich die Eingangsimpedanz der Reihenschaltung (nicht gezeigt) der Leuchten 3 messbar. Bei einer solchen Reihenschaltung kann daher nicht darauf geschlossen werden, welche Leuchte 3 der Reihenschaltung defekt ist.

Mit der Prüfung sind auch Leitungskurzschlüsse und Leitungsunterbrechungen der Zuleitung und/oder Stichleitungen messbar. Dabei ist der gemessene Impedanzwert bei einem Leitungskurzschluss nahezu null.

Um eine Leitungsunterbrechung in einer Stichleitung von einer Leitungsunterbrechung in der gemeinsamen Zuleitung 7 besser unterscheiden zu können, ist am Zuleitungsende eine Abschlussimpedanz 6 vorgesehen.

Es kann auch hier wie bei dem Beispiel der Fig. 1 vorgesehen sein, das Ergebnis einer Prüfmessung über eine Kommunikationsschnittstelle und ein Netzwerk 9 an eine entfernte Kommunikationsgegenschnittstelle 90 zu übertragen

Alternativ und/oder zusätzlich kann das Ergebnis der Prüfmessung optisch und/oder akustisch an der Beleuchtungsanlage 1 ausgegebene werden. Insbesondere wenn ein nicht korrekter Funktionszustand ermittelt wird, ist die Ausgabe eines Warnsignals sinnvoll. Zu diesem Zweck kann eine entsprechende Signal- bzw. Alarmvorrichtung an der Beleuchtungsanlage 1 angeordnet sein.

Es ist auch möglich, ein Alarmsignal durch ein zeitlich moduliertes Leuchtmuster der Leuchten 3 selbst auszugeben. Zu diesem Zweck können beispielsweise die Leuchten 3 der Beleuchtungsanlage 1 nach Feststellung einer nicht korrekten Funktion durch die Prüfvorrichtung 2 ein wiederholtes Blinkmuster ausgeben, z.B. im Abstand von einigen Sekunden oder einigen 10 Sekunden ein- oder mehrfach kurz aufleuchten. Bei eingeschalteten Leuchten 3 kann ein umgekehrtes Blinkmuster ausgegeben werden, beispielsweise indem die Leuchten 3 gleichzeitig oder bevorzugt nacheinander im Abstand von einigen Sekunden oder einigen 10 Sekunden ein- oder mehrfach kurz verlöschen. Auf diese Weise kann ein nicht korrekter Funktionszustand einer oder mehrerer der Leuchten 3 signalisiert werden, ohne dass eine zusätzliche Signalleuchte notwendig wäre. Die Funktonalität der (noch funktionsfähigen) Leuchten 3 wird dabei durch das kurze Aufleuchten bzw. Verlöschen nicht beeinträchtigt.

In der Fig. 2 ist außerdem eine Notstromversorgung 4 gezeigt, die beispielsweise als Batterie ausgebildet ist. Die Prüfvorrichtung 2 überprüft zusätzlich die Kapazität einer Batterie der Notstromversorgung, wiederum bevorzugt zyklisch, und gibt bei Unterschreiten einer Mindestkapazität eine Fehlermeldung aus. Falls die Batterie der Notstromversorgung unmittelbar zugänglich ist, kann eine Überprüfung unmittelbar durch die Prüfvorrichtung 2 über eine Kapazitätsmessung erfolgen. Es kann aber auch eine separate Prüf- und/oder Kommunikationseinheit für diese Prüfung vorgesehen sein, sofern eine Batterie verwendet wird, die die Prüfung über die Prüfvorrichtung nicht zulässt. Informationen über die Notstromversorgung können dann der Prüfvorrichtung 2 über eine Kommunikationsschnittstelle mitgeteilt werden, die diese Informationen dann auswertet und ggf. weiterleitet.

### Bezugszeichenliste

- 1: Beleuchtungsanlage
- 2: Prüfvorrichtung
- 21: Verarbeitungseinheit
- 22: Kommunikationsschnittstelle
- 23: Datenspeicher
- 24: Bedienerschnittstelle
- 3: Leuchte
- 31: Impedanz
- 32: Vorschaltgerät
- 33: Leuchtkörper, Lampe, Röhre, LED
- 34: Überwachungsvorrichtung
- 341: Verstimmungsimpedanz
- 35, 36: Prüfsignal
- 4: Notstromsversorgung
- 5: Testsignal
- 6: Abschlussimpedanz
- 7: Zuleitung, Versorgungsleitung, 220V- Versorgungsleitung
- 71: Versorgungs- Stichleitung
- 8: Kommunikationssignal
- 9: Kommunikationsnetzwerk (Lan, WLan, Ethernet, Feldbus, weitere)

## Patentansprüche

1. Beleuchtungsanlage (1), insbesondere zur Not- und/oder Sicherheitsbeleuchtung, umfassend eine Parallelschaltung einer Mehrzahl von Leuchten (3, 3'), wobei jede Leuchte (3, 3') einen Leuchtkörper (33, 33') aufweist, und eine Prüfvorrichtung (2), die zum Messen der Impedanz (31, 31') der Parallelschaltung eingerichtet ist, wobei die Prüfvorrichtung (2) eine Verarbeitungseinheit (21) aufweist, mit der ein Hochfrequenzsignal als Messsignal (5) erzeugbar ist, um die Impedanz sowohl in einem Referenzzustand, als auch in einem Betriebszustand, in dem die Leuchten (3, 3') eingeschaltet sind, zu messen, **dadurch gekennzeichnet, dass** jede Leuchte (3, 3') eine dem Leuchtkörper (33, 33') vorgeschaltete definierte Impedanz (31, 31') umfasst und jede Leuchte (3, 3') eine Überwachungsvorrichtung (34, 34') zur Überwachung von Eigenschaften der Leuchte (3, 3') umfasst, wobei jede Überwachungsvorrichtung (34, 34') Mittel (341) zum Verstimmen der jeweiligen Impedanz (31, 31') aufweist, um die Impedanz (31, 31') abhängig von den überwachten Eigenschaften der Leuchte (3, 3') einzustellen.

2. Beleuchtungsanlage (1) nach Anspruch 1, **dadurch gekennzeichnet, dass** zumindest eine Leuchte (3) einen oder mehrere Leuchtkörper (33) umfasst, der oder die in verschiedenen Leuchtmodi betreibbar sind.

3. Beleuchtungsanlage (1) nach Anspruch 1 oder 2, **dadurch gekennzeichnet, dass** die Mittel (341) zum Verstimmen der Impedanz (31) eine oder mehrere Verstimmimpedanzen sind, die der Impedanz (31) parallel und/oder in Reihe schaltbar sind.

4. Beleuchtungsanlage (1) nach einem der Ansprüche 1 bis 3, **dadurch gekennzeichnet, dass** in einer Zuleitung für die Leuchten (3, 3') eine Abschlussimpedanz (6) angeordnet ist.

5. Beleuchtungsanlage (1) nach einem der Ansprüche 1 bis 4, **dadurch gekennzeichnet, dass** die Prüfvorrichtung (2) eine Verarbeitungseinheit (21) zur Bestimmung eines Funktionszustandes der Leuchten (3, 3') umfasst.

6. Beleuchtungsanlage (1) nach Anspruch 5, **dadurch gekennzeichnet, dass** die Prüfvorrichtung (2) eine Kommunikationsschnittstelle (22) umfasst, mit der der Funktionszustand der Leuchten (3, 3') an eine Kommunikationsgegenschnittstelle übertragbar ist.

7. Beleuchtungsanlage (1) nach Anspruch 5 oder 6, **dadurch gekennzeichnet, dass** die Beleuchtungsanlage dazu eingerichtet ist, bei einem nicht korrekten Funktionszustandes der Leuchten (3, 3') ein Signal optisch und/oder akustisch auszugeben.

8. Beleuchtungsanlage (1) nach Anspruch 7, **dadurch gekennzeichnet, dass** das Signal durch ein zeitlich moduliertes Leuchtmuster der Leuchten (3, 3') ausgegeben wird.

9. Beleuchtungsanlage (1) nach einem der Ansprüche 1 bis 8, **dadurch gekennzeichnet, dass** die Beleuchtungsanlage eine Notstromversorgung (4) aufweist, deren korrekte Funktion ebenfalls von der Prüfvorrichtung (2) ermittelt wird.

10. Verfahren zum Bestimmen des Funktionszustandes einer Anordnung mehrerer Leuchten (3, 3') einer Beleuchtungsanlage (1) gemäß einem der Ansprüche 1 bis 9, insbesondere zur Not- und/oder Sicherheitsbeleuchtung, **dadurch gekennzeichnet, dass**
• ein erster Impedanzwert der Anordnung der Leuchten (3, 3') mittels eines Hochfrequenzsignals als Messsignal (5) in einem Referenzzustand gemessen wird, dass
• der gemessene Impedanzwert als Referenzwert gespeichert wird, dass
• ein zweiter Impedanzwert der Leuchten (3, 3') mittels des Hochfrequenzsignals als Messsignal (5) in einem Betriebszustand, in dem die Leuchten (3, 3') eingeschaltet sind, wiederholt gemessen wird, dass
• der zweite Impedanzwert mit dem ersten Impedanzwert verglichen wird, und dass
• ein Funktionszustand abhängig von dem Ergebnis des Vergleichs bestimmt wird.

11. Verfahren nach Anspruch 10, **dadurch gekennzeichnet, dass** die Leuchten (3, 3') im Referenzzustand ausgeschaltet sind.

12. Verfahren nach Anspruch 10 oder 11, **dadurch gekennzeichnet, dass** die Prüfvorrichtung (2) die Impedanzwerte über Versorgungsleitungen (7, 71) der Leuchten (3, 3') misst.

## Claims

1. Lighting system (1), in particular for emergency and/or safety lighting, comprising a parallel connection of a plurality of lights (3, 3'), wherein each light (3, 3') has a luminous body (33, 33'), and a test device (2) designed to measure the impedance (31, 31') of the parallel connection, wherein the test device (2) has a processing unit (21) with which a high-frequency signal can be generated as a measurement signal (5) in order to determine the impedance both in a reference state and in an operating state in which the lights (3, 3') are switched on, **characterized in that** each light (3, 3') comprises a defined impedance (31, 31') connected upstream of the luminous body (33, 33'), and each light (3, 3') comprises a monitoring device (34, 34') for monitoring properties of the light (3, 3'), wherein each monitoring device (34, 34') comprises means (341) for detuning the respective impedance (31, 31') to adjust the impedance (31, 31') depending on the monitored properties of the light (3, 3').

2. Lighting system (1) according to claim 1, **characterized in that** at least one light (3) comprises one or more luminous bodies (33) which can be operated in different lighting modes.

3. Lighting system (1) according to claim 1 or 2, **characterized in that** the means (341) for detuning the impedance (31) are one or more detuning impedances which can be connected in parallel and/or in series to the impedance (31).

4. Lighting system (1) according to one of claims 1 to 3, **characterized in that** a terminating impedance (6) is arranged in a supply line for the lights (3, 3').

5. Lighting system (1) according to one of claims 1 to 4, **characterized in that** the test device (2) comprises a processing unit (21) for determining a functional state of the lights (3, 3').

6. Lighting system (1) according to claim 5, **characterized in that** the test device (2) comprises a communication interface (22) with which the functional state of the lights (3') can be transmitted to a communication counter-interface.

7. Lighting system (1) according to claim 5 or 6, **characterized in that** the lighting system is set up to output a signal optically and/or acoustically in the event of an incorrect functional state of the lights (3, 3').

8. Lighting system (1) according to claim 7, **characterized in that** the signal is output by a time-modulated light pattern of the lights (3, 3').

9. Lighting system (1) according to one of claims 1 to 8, **characterized in that** the lighting system has an emergency power supply (4), the correct functioning of which is also determined by the test device (2).

10. Method for determining the functional state of an arrangement of several lights (3, 3') of a lighting system (1) according to one of claims 1 to 9, in particular for emergency and/or safety lighting, **characterized in that**
• a first impedance value of the arrangement of the lights (3, 3') is measured by means of a high-frequency signal as a measurement signal (5) in a reference state, **in that**
• the measured impedance value is stored as reference value, **in that**
• a second impedance value of the lights (3, 3') is repeatedly measured by means of the high-frequency signal as a measurement signal (5) in an operating state in which the lights (3, 3') are switched on, **in that**
• the second impedance value is compared with the first impedance value, and **in that**
• a functional state is determined depending on the result of the comparison.

11. Method according to claim 10, **characterized in that** the lights (3, 3') are switched off in the reference state.

12. Method according to claim 10 or 11, **characterized in that** the test device (2) measures the impedance values via supply lines (7, 71) of the lights (3, 3').

## Revendications

1. Installation d'éclairage (1), en particulier pour l'éclairage de secours et/ou de sécurité, comprenant un montage en parallèle d'une pluralité de luminaires (3, 3'), chaque luminaire (3, 3') présentant un corps lumineux (33, 33'), et un dispositif de contrôle (2) qui est conçu pour mesurer l'impédance (31, 31') du montage en parallèle,
le dispositif de contrôle (2) présentant une unité de traitement (21) avec laquelle un signal à haute fréquence peut être généré en tant que signal de mesure (5) pour mesurer l'impédance aussi bien dans un état de référence que dans un état de fonctionnement dans lequel les luminaires (3, 3') sont allumés,
**caractérisée en ce que**
chaque luminaire (3, 3') comprend une impédance définie (31, 31') montée en amont du corps lumineux (33, 33') et chaque luminaire (3, 3') comprend un dispositif de surveillance (34, 34') pour surveiller des caractéristiques du luminaire (3, 3'), chaque dispositif de surveillance (34, 34') présentant des moyens (341) pour désaccorder l'impédance respective (31, 31') afin de régler l'impédance (31, 31') en fonction des caractéristiques surveillées du luminaire (3, 3').

2. Installation d'éclairage (1) selon la revendication 1, **caractérisée en ce qu'**au moins un luminaire (3) comprend un ou plusieurs corps lumineux (33) qui peut ou peuvent fonctionner dans différents modes d'éclairage.

3. Installation d'éclairage (1) selon la revendication 1 ou 2, **caractérisée en ce que** les moyens (341) pour désaccorder l'impédance (31) sont une ou plusieurs impédances de désaccord qui peuvent être montées en parallèle et/ou en série avec l'impédance (31).

4. Installation d'éclairage (1) selon l'une des revendications 1 à 3, **caractérisée en ce qu'**une impédance terminale (6) est disposée dans une ligne d'alimentation pour les luminaires (3, 3').

5. Installation d'éclairage (1) selon l'une des revendications 1 à 4, **caractérisée en ce que** le dispositif de contrôle (2) comprend une unité de traitement (21) pour déterminer un état de fonctionnement des luminaires (3, 3').

6. Installation d'éclairage (1) selon la revendication 5, **caractérisée en ce que** le dispositif de contrôle (2) comprend une interface de communication (22) avec laquelle l'état de fonctionnement des luminaires (3, 3') peut être transmis à une interface de communication conjuguée.

7. Installation d'éclairage (1) selon la revendication 5 ou 6, **caractérisée en ce que** l'installation d'éclairage est conçue pour émettre un signal optique et/ou acoustique en cas d'état de fonctionnement incorrect des luminaires (3, 3').

8. Installation d'éclairage (1) selon la revendication 7, **caractérisée en ce que** le signal est émis par un motif lumineux modulé dans le temps des luminaires (3, 3').

9. Installation d'éclairage (1) selon l'une des revendications 1 à 8, **caractérisée en ce que** l'installation d'éclairage présente une alimentation électrique de secours (4) dont le fonctionnement correct est également déterminé par le dispositif de contrôle (2).

10. Procédé de détermination de l'état de fonctionnement d'un agencement de plusieurs luminaires (3, 3') d'une installation d'éclairage (1) selon l'une des revendications 1 à 9, en particulier pour un éclairage de secours et/ou de sécurité, **caractérisé en ce que**
• une première valeur d'impédance de l'agencement de luminaires (3, 3') est mesurée dans un état de référence au moyen d'un signal à haute fréquence en tant que signal de mesure (5), que
• la valeur d'impédance mesurée est mémorisée en tant que valeur de référence, que
• une deuxième valeur d'impédance des luminaires (3, 3') est mesurée de manière répétée au moyen du signal à haute fréquence en tant que signal de mesure (5) dans un état de fonctionnement dans lequel les luminaires (3, 3') sont allumés, que
• la deuxième valeur d'impédance est comparée avec la première valeur d'impédance et que
• un état de fonctionnement est déterminé en fonction du résultat de la comparaison.

11. Procédé selon la revendication 10, **caractérisé en ce que** les luminaires (3, 3') sont éteints dans l'état de référence.

12. Procédé selon la revendication 10 ou 11, **caractérisé en ce que** le dispositif de contrôle (2) mesure les valeurs d'impédance par l'intermédiaire de lignes d'alimentation (7, 71) des luminaires (3, 3').
